# EUROPÄISCHE PATENTSCHRIFT

(11) **EP 3 025 092 B1**
(45) Veröffentlichungstag und Bekanntmachung des Hinweises auf die Patenterteilung: **17.05.2017**
(21) Anmeldenummer: 14735952.5
(22) Anmeldetag: 03.07.2014
(51) Int. Cl.: F21V 8/00

(54) **LICHTLEITPLATTE UND VERFAHREN ZU DEREN HERSTELLUNG**
LIGHT GUIDE PLATE AND METHOD FOR THE PRODUCTION THEREOF
PLAQUE DE GUIDAGE DE LUMIÈRE ET SON PROCÉDÉ DE FABRICATION

(30) Priorität: 22.07.2013 DE 102013214257
(43) Veröffentlichungstag der Anmeldung: 01.06.2016
(73) Patentinhaber: Evonik Röhm GmbH, 64293 Darmstadt (DE)
(72) Erfinder: GROOTHUES, Herbert, 60528 Frankfurt (DE); SCHMIDT, Jann, 64331 Weiterstadt (DE); KARAMPOUGIOUKIS, Wangelis, 64293 Darmstadt (DE); NEUMAYER, Stephan, 60320 Frankfurt (DE); HÄRING, Helmut, 64853 Otzberg (DE); SCHÖNIG, Berthold, 64380 Rossdorf (DE)
(86) Internationale Anmeldenummer: PCT/EP2014/064212
(87) Internationale Veröffentlichungsnummer: WO 2015/010871

(56) Entgegenhaltungen:
- EP-A1- 2 199 839
- EP-A2- 1 845 407
- DE-A1-102009 027 288
- US-A1- 2011 244 187
- US-A1- 2012 147 627

## Beschreibung

### Gebiet der Erfindung

Lichtleitplatten, z.B. in Back Light Units (BLUs) oder Lichtpaneelen, haben eine möglichst homogene Dicke und bestehen aus farblos transparenten Materialien. Hierbei wird Licht z.B. von LED oder CCFL Leuchtquellen über eine oder mehrere Kanten der Lichtleitplatte eingespeist. Auf mindestens einer Oberfläche der Lichtleitplatte befindet sich eine Struktur, die das Licht streut. Wenn ein Lichtstrahl auf diese Struktur trifft, wird dieser in einem kleineren Winkel als den Winkel der Totalreflexion gestreut und damit aus der Platte ausgekoppelt. Da das Licht zu beiden Seiten der Platte ausgekoppelt wird, befindet sich auf einer Seite meist eine weiße Reflektorfolie, die nicht mit der Platte in optischem Kontakt steht. Mit diesem Aufbau wird das Licht nur zur einen Seite ausgestrahlt. Die Dichte der Licht auskoppelnden Struktur nimmt mit zunehmender Entfernung von den Lichtquellen in der Regel zu. Dadurch erreicht man, dass das an der oder den Kanten eingekoppelte Licht gleichmäßig über die Oberflächen des Lichtleiters wieder ausgekoppelt wird.

### Stand der Technik

Für das Aufbringen der auskoppelnden Struktur gibt es verschiedene technische Möglichkeiten, die entweder Offline an Plattenzuschnitten oder Inline während eines kontinuierlichen Herstellprozesses der Platten zum Einsatz kommen. Zu den Offlinemethoden zählt u.a. der Flachbettsiebdruck eines weißen, transluzenten oder opaken Lackes, die Lasergravur oder eine mechanische Bearbeitung mit einer CNC-Fräse. Bei den Inlinemethoden kommt zum Beispiel das Einprägen der Strukturen durch eine strukturierte Walze in einem Glättwerk an einem Plattenextruder zum Einsatz. Die Offlinemethoden haben vor allem den Nachteil, dass sie aufgrund des hohen Arbeitsaufwandes langsam und kostenintensiv sind. Weiterhin erhöht das Handling der Lichtleitplatten bei der Bedruckung die Gefahr einer Beschädigung der Oberfläche durch Kratzer und somit eines erhöhten Ausschusses. Die Strukturierung inline mit einer entsprechend strukturierten Walze im Glättwerk erfordert relativ hohe Investitionskosten für die Strukturierung der Walze. Auch ist das Metall, aus der die strukturierte Walzenoberfläche besteht, in der Regel deutlich weicher als eine verchromte Standardglättwalze, da es einfacher zu bearbeiten sein muss. Dadurch ergeben sich im Vergleich zu normalen Glättwalzen deutlich geringere Standzeiten für diese strukturierten Walzen, z.B. aufgrund von Beschädigungen oder Abnutzung. Zudem weisen strukturierte Walzen eine empfindlichere Oberfläche auf. Ein weiterer Nachteil ist die geringe Flexibilität bei der Inlineprägung bezüglich der Struktur. Die Prägestruktur muss individuell auf jedes Lichtpaneldesign angepasst werden, um eine gleichmäßige Lichtauskopplung zu erreichen. Bei einem Inlineprägeprozess kann ein Wechsel der Struktur nur erreicht werden, indem die Strukturwalze getauscht wird. Hierzu muss der gesamte Extrusionsprozess gestoppt werden. Ein solcher Wechsel dauert mehrere Stunden und ist mit hohen Kosten verbunden. Ein weiterer Nachteil des Inlineprägeverfahrens ist die Limitierung der Wiederholung einer Struktur auf den Umfang einer Glättwalze. Dadurch ist bei dieser Methode nur ein Gradient der Strukturdichte senkrecht zur Extrusionsrichtung praktikabel, da eine Anpassung des Umfangs einer Glättwalze an ein bestimmtes Lichtpanelformat oder BLU-Format nicht möglich ist.

DE 102009027288A1 offenbart eine Struktur zur Auskopplung des Lichtes aus einer Lichtleitplatte, die zunächst auf eine transparente Folie gedruckt wird. Diese Folie wird anschließend im Glättspalt eines Extruderglättwerks auf eine farblos transparente Platte laminiert. Die Vorteile liegen darin, dass der Druck der Strukturen auf einer Folie sehr einfach durchzuführen ist und die Folie die Struktur vor mechanischer Beschädigung schützt. Da die Folie aber auch als Lichtleiter fungiert, muss diese selbst durch mindestens eine weitere Schicht vor mechanischer Beschädigung geschützt werden. Zudem ist die Lichttransmission von farblos transparenten Folien im Allgemeinen schlechter als bei Lichtleitplatten. Letztere können aus optisch hochtransparentem PMMA hergestellt werden. Für dünne Folien ist ein farblos transparentes PMMA zu spröde. Man muss entweder bezüglich der Lichtleitung eher störende Schlagzähmodifier einsetzen, oder ein Polymer verwenden, das eine geringere Transparenz aufweist, wie z.B. PET oder Polycarbonat. In beiden Fällen wird die Lichtleitfunktion gegenüber einem reinen PMMA reduziert. Auch eine zusätzliche Reflektorfolie wird benötigt.

Gemäß DE 69914089 kann eine Reflektorfolie auch mit einem Kleber vollständig auf eine Lichtleitplatte auflaminiert werden. Die gesamte Reflektorfolie steht in optischen Kontakt zu der Lichtleitplatte. Um eine näherungsweise homogene Lichtauskopplung zu erreichen, müssen einzelne Streifen mit von der Lichtquelle zunehmendem Abstand breiter werdende Streifen auf die Lichtleitplatte geklebt werden. Damit lässt sich nicht die feine Struktur eines Druckmusters auf einer Folie realisieren und somit ist die Lichtauskopplung tendenziell inhomogen. Zum anderen lassen sich solche Streifen nur sehr schwer in einem Inlineverfahren exakt auf die Oberfläche laminieren. Weiterhin hat diese Erfindung den Nachteil, dass man dennoch eine zusätzliche Reflektorfolie hinter den aufgeklebten Streifen benötigt.

KR 20-2009-004295 beschreibt eine Reflektorfolie, die eine aufgedruckte Lichtleitstruktur aufweist. Die aufgedruckte Struktur besteht jedoch entweder aus zwei getrennten Schichten, bei denen es sich bei einer Schicht um einen Klebstoff und bei der anderen um eine diffuse Schicht handelt, oder aus einer Mischung aus Klebstoff und Diffuser. Zudem benötigt der Kleber einen sogenannten "Release-Liner", eine Folie, welche die Klebeschicht schützt und vor der Lamination entfernt werden muss. Damit unterliegt der Herstellprozess jedoch zusätzlichen Arbeitsschritten. Zudem birgt der Kleber, bei dem es sich in der Regel um einen Haftklebstoff handelt, den Nachteil, dass es nach einer längeren Nutzungsdauer zu einem Haftungsverlust kommen kann.

EP2199839 offenbart eine planare lichtemittierende Vorrichtung, die folgendes umfasst:
eine Lichtquelle,
ein Lichtführungselement, das so angeordnet ist, dass das Licht von der Lichtquelle durch dieses geleitet werden kann;
ein reflektierendes Element, dass so angeordnet ist, dass das reflektierende Element dem Lichtführungselement zugewandt ist, und das reflektierende Element das Licht reflektiert, das durch das Lichtführungselement geleitet wird; und
ein Klebeelement, dass so angeordnet ist, dass das Lichtführungselement und das reflektierende Element aneinander befestigt werden. Die Verteilung der Klebebereiche des Klebeelements auf der Oberfläche des Lichtführungselements wird auf Basis der Helligkeitsverteilung der planaren lichtemittierenden Vorrichtung bestimmt, wenn das Klebeelement auf der Oberfläche des Lichtführungselements gleichmäßig verteilt ist, zwischen dem Lichtführungselement und dem reflektierenden Element, in Übereinstimmung mit der Verteilung der Klebebereiche.

US 2012/147627 A1 lehrt ein Lichtleiter-Modul, das folgendes umfasst:
eine Lichtleiterplatte, die eine Lichteinfallsfläche, eine Lichtaustrittsfläche und eine Bodenfläche aufweist, wobei die Lichtaustrittsfläche der Lichteinfallsfläche entgegengesetzt ist, und die Lichteinfallsfläche mit der Lichtaustrittsfläche und der Bodenfläche in Verbindung steht;
ein diffuser Reflektor, der an der Bodenfläche der Lichtleiterplatte durch eine strukturiert aufgetragene Klebeschicht befestigt ist. Die strukturiert aufgetragene Klebeschicht umfasst mehrere lichtdurchlässige klebende Gele, die keine Streupartikel enthalten.

EP 1845407 A2 offenbart eine optische Platte, die ein lichtdurchlässiges Substrat und eine optische Funktionsschicht umfasst, die auf mindestens einer Oberfläche des Substrats angeordnet ist. Das Substrat ist aus mehreren durchlässigen Folien zusammengesetzt, zwischen denen mindestens eine Klebeschicht angeordnet ist.

Lichtleitplatten nach Stand der Technik koppeln das Licht in der Regel mit einem Intensitätsmaximum in einem Winkel größer 60° aus (gemessen zur Oberflächennormalen der Lichtleitplatte). Um eine möglichst gleichmäßige Intensitätsverteilung über 0° bis 60°zu erzielen haben fast alle beschriebenen Systeme gemeinsam, dass insbesondere bei der Verwendung in Beleuchtungssystemen mit seitlich eingekoppelten LED-Licht, auf der Auskopplungsseite zusätzlich eine Streufolie oder -platte eingesetzt wird. Diese hat dabei keinen optischen Kontakt zur Lichtleitplatte. Damit ein besonders gleichmäßiges Lichtbild erzielt werden kann, ist es dabei nötig, dass diese Streuplatte bzw. -folie einen hohen Anteil Streupartikel aufweist. Dies hat jedoch den Nachteil, dass es zu Rückreflektionen und zu Streuungen in die Streufolie bzw. -platte kommt. Damit liegt für Systeme des Standes der Technik in Bezug auf die Lichtausbeute ein Optimierungsbedarf vor.

### Aufgabe

In Anbetracht des Standes der Technik lag somit der vorliegenden Erfindung die Aufgabe zugrunde, eine neuartige Lichtleitplatte zur Auskopplung von Licht zur Verfügung zu stellen, die dazu geeignet ist, Licht über die gesamte Auskopplungsfläche gleichmäßig und in hoher Ausbeute auszukoppeln.

Ferner lag der Erfindung die Aufgabe zugrunde, dass diese Lichtleitplatte lange einsetzbar und kostengünstig herstellbar sein soll.

Weiterhin bestand die Aufgabe, die zur Streuung oder Umlenkung des Lichts aufgedruckten Störstellen so zu schützen, dass deren Beschädigung verhindert wird.

Weiterhin sollen die erfindungsgemäßen Lichtleitplatten in Lichtpaneelen oder in Back Light Units von LCD-Displays einsetzbar sein.

Darüber hinaus bestand die Aufgabe, die Lichtausbeute bei Verwendung einer Streuplatte- bzw. -folie auf der Auskopplungsseite der Lichtleitplatte zu steigern. Insbesondere bestand dabei die Aufgabe, das Licht mit einer gleichmäßigen Intensitätsverteilung zwischen 0 und 60° auszukoppeln, wobei in dieser Streuplatte bzw. -folie im Vergleich zum Stand der Technik eine deutlich geringere Menge Streupartikel nötig ist.

Gleichzeitig war es Aufgabe der vorliegenden Erfindung ein Verfahren zur Herstellung solcher Lichtleitplatten zur Verfügung zu stellen, das einfacher, kostengünstiger und nach Möglichkeit schneller durchzuführen ist, als die nach Stand der Technik bekannten Verfahren zur Herstellung von Lichtleitplatten.

Weiter nicht explizit genannte Aufgaben können sich aus dem Zusammenhang der vorliegenden Erfindung, wie z.B. aus der Beschreibung oder den Beispielen ergeben.

### Lösung

Im Folgenden werden die Begriffe Lichtleitplatte und Vorrichtung zum Transport von Licht synonym verwendet und bezeichnen die gesamte Vorrichtung bestehend aus den Komponenten farblos transparente Platte, Reflektorfolie und dazwischen liegend einem aufgedruckten Thermoplasten. Nicht zu verwechseln damit ist die Bezeichnung Platte oder farblos transparente Platte, die ausschließlich den z.B. durch Extrusion hergestellten ersten Bestandteil der Lichtleitplatte umschreibt. Alternativ können die Platten auch über ein kontinuierliches Gussverfahren (Continuous Cast) hergestellt werden. Ebenfalls synonym zueinander werden im Folgenden die Begriffe gedruckter Thermoplast, Störstelle und Bedruckung verwendet.

Unter der Formulierung "optischer Kontakt" wird im Folgenden eine chemische Bindung oder eine physikalische Haftung zwischen zwei Schichten bzw. Grenzflächen verstanden. Ausdrücklich nicht erfasst von der Formulierung "optischer Kontakt" ist ein reines Aufliegen einer Schicht, insbesondere der Reflektorfolie, auf einer anderen Schicht, insbesondere der farblosen, transparenten Platte.

Gelöst wurden die Aufgaben durch zur Verfügung stellen einer neuartigen Lichtleitplatte, die aus einer farblos transparenten Platte und einer opak-weißen oder transluzenten weißen, thermoplastischen Reflektorfolie besteht, die mittels einer dazwischen angeordneten Bedruckung derart optisch verbunden sind, dass es keinen direkten optischen Kontakt zwischen der farblos transparenten Platte und der Reflektorfolie gibt. Die farblos transparente Platte weist eine homogene Dicke auf. Dabei befindet sich erfindungsgemäß zwischen der farblos transparenten Platte und der Reflektorfolie ein strukturiert aufgedruckter farbloser Thermoplast oder Reaktivklebstoff, insbesondere einem reactive hot melt. Dieser Thermoplast weist eine Glasübergangstemperatur größer als 25 °C und kleiner als die Glasübergangstemperaturen des Materials der farblos transparenten Platte und des Thermoplasten der Reflektorfolie auf. Ein alternativ verwendeter Reaktivklebstoff zeichnet sich dadurch aus, dass dieser bei einer Temperatur oberhalb von 25 °C und unterhalb der Glasübergangstemperaturen des Materials der farblos transparenten Platte und des Thermoplasten der Reflektorfolie aushärtet.

Unter opak werden Materialien verstanden, die 0 bis 10 % des Lichts transmittieren und entsprechend einen großen Anteil des Lichts reflektieren. Unter transluzent werden Materialien verstanden, die 10 bis 70 % des Lichts diffus transmittieren.

Insbesondere zeichnet sich die erfindungsgemäße Lichtleitplatte dadurch aus, dass es keinen direkten optischen Kontakt zwischen der farblos transparenten Platte und der Reflektorfolie gibt. Wie bereits zuvor definiert, besagt kein direkter optischer Kontakt hier, dass es sehr wohl zu einem teilweisen, wenn auch nicht flächendeckenden Aufliegen der Reflektorfolie auf der farblos transparenten Platte kommen kann.

Überraschend kann bei Verwendung einer solchen Lichtleitplatte auf eine zusätzliche Schicht zur Reflektion bzw. anders gesehen auf eine zusätzlich Kaschierfolie zum Schutz der Störstellen verzichtet werden, da bei diesem Aufbau die Reflektorfolie gleichzeitig als Schutz für die als Strukturen zur Lichtauskopplung verwendeten aufgedruckten Thermoplasten und zur Reflektion des Lichts dient. Weiterhin hat die erfindungsgemäße Lichtleitplatte den Vorteil, dass die Bedruckung mit dem Thermoplasten sowohl gegenüber Abrieb als auch gegen äußere Einflüsse wie Feuchtigkeit, Chemikalien oder Witterungseinflüsse geschützt ist. Insbesondere hat die erfindungsgemäße Lichtleitplatte den großen Vorteil gegenüber dem Stand der Technik, dass die Auskopplung des Lichtes mit der Reflektorfunktion in einer modifizierten Schicht miteinander gekoppelt wird.

Die farblos transparente Platte in der erfindungsgemäßen Lichtleitplatte besteht bevorzugt aus Polycarbonat, einem Cycloolefincopolymer, Polystyrol, PMMA oder einem Copolymer aus MMA und Styrol. Besonders bevorzugt besteht die farblos transparente Platte aus PMMA oder einem Copolymer aus MMA und Styrol, ganz besonders bevorzugt aus PMMA. PMMA bedeutet erfindungsgemäß nicht zwangsläufig, dass es um ein reines Polymer aus MMA handelt. Vielmehr enthalten viele kommerziell erhältliche PMMA, oft als Acrylglas bezeichnet, einen gewissen Anteil an Comonomeren, wie z.B. Alkylacrylaten, u.a. um die thermische Stabilität zu verbessern.

Alternativ besteht die farblose transparente Platte aus einem Blend, welcher mindestens 50 Gew% PMMA enthält. Bei der Auswahl der weiteren Blend-Bestandteile ist dabei, für den Fachmann einfach ermittelbar, darauf zu achten, dass diese eine derartige Verträglichkeit mit dem PMMA aufweisen, dass es zu keiner Störung der Transparenz kommt.

Die farblos transparente Platte hat bevorzugt eine Dicke zwischen 0,25 mm und 25 mm, bevorzugt zwischen 1 mm und 10 mm und besonders bevorzugt zwischen 1,5 mm und 4 mm. Ein Beispiel für das bevorzugt verwendete PMMA ist das unter dem Handelsnamen PLEXIGLAS® von der Fa. Evonik Röhm GmbH & Co. KG kommerziell erhältliche PMMA.

Die Reflektorfolien können aus nahezu jedem beliebigen thermoplastischen Material bestehen. Beispielsweise bestehen die Folien aus Poly(meth)acrylat. Unter Poly(meth)acrylat werden in diesem Zusammenhang Homo- bzw. Copolymere von Methacrylaten und/oder Acrylaten verstanden. Bevorzugt bestehen die erfindungsgemäß verwendeten Reflektorfolien aus einem Polyester. Besonders bevorzugt handelt es sich dabei um eine Folie aus PET. Die Reflektorfolien weisen bevorzugt eine Dicke zwischen 25 und 500 µm und besonders bevorzugt zwischen 50 µm und 200 µm auf. In einer weiteren, gleichfalls besonders bevorzugten Ausführungsform handelt es sich bei der Reflektorfolie um eine Dreischichtfolie mit einer mittleren Schicht aus Partikel enthaltenem, teilkristallinem Polypropylen (PP) und zwei äußeren Schichten aus Cycloolefincopolymeren. Bei den Partikeln handelt es sich in diesem Fall insbesondere um TiO₂, BaSO₄ oder CaCO3. Solche dreischichtigen Folien werden beispielsweise von der Firma Mitsubishi Plastics unter dem Namen Lumirex II M20 oder L20 vertrieben.

Die Reflektorfolien sind weiterhin weiß-opak oder zumindest transluzent weiß. Ausführungen mit einer transparenten Folie, die in diesem Fall eigentlich nur eine Schutzfolie wäre, sind nicht erfindungsgemäß, da solchen Systemen der Vorteil fehlen würde, keine zusätzliche Schicht zur Reflektion einzubauen. Eine transluzente Folie führt dazu, dass ein bestimmter Anteil des ausgekoppelten Lichtes auch zu der Seite des Panels abgestrahlt wird, auf der sich diese Folie befindet. Damit kann man Leuchtpaneele erzeugen, die zum Beispiel zusätzlich zur direkten Beleuchtung auch noch entsprechend dem Lichttransmissionsgrad der Folie eine definierte Lichtmenge in die Gegenrichtung abstrahlen, um z.B. eine indirekte Beleuchtung über die Decke zu bewirken. Die Weißfärbung, unabhängig von dem Grad der Färbung zu einem opaken oder transluzenten System kann durch Zugabe von dem Fachmann bekannten Füllstoffen realisiert werden. Beispiele für solche Füllstoffe sind TiO₂, Siliziumdioxid oder Bariumsulfat. Kommerziell erhältliche Beispiele für weiß eingefärbte Reflektorfolien aus PET sind Melinex 339 von Dupont Tejin oder Hostaphan WO50 von Mitsubishi Rayon.

Der aufgedruckte Thermoplast, der in der fertigen Lichtleitplatte die Funktion von Störstellen zur Brechung und Auskopplung der Lichts auf der Ansichtsseite der Lichtleitplatte hat, kann auf jedem thermoplastischen Material basieren, welches eine Glasübergangstemperatur von über 25 °C und unterhalb der Erweichungstemperaturen der Reflektorfolie und der farblos transparenten Platte liegt, wobei es sich um Glasübergangstemperaturen oder Schmelztemperaturen handeln kann. Bei Verwendung eines thermisch aktivierten Reaktivklebers (reactive hot melt) muss die thermische Aktivierung ebenfalls oberhalb 25°C und unterhalb der Schmelztemperatur von Folie und Lichtleitplatte liegen. Weiterhin muss der Fachmann bei der Auswahl berücksichtigen, dass der Thermoplast oder Reaktivkleber nicht durch das jeweilige Druckverfahren beschränkt wird. Der Brechungsindex des aufgedruckten Thermoplasten oder Reaktivklebers kann prinzipiell kleiner, gleichgroß oder größer als der Brechungsindex der farblos transparenten Platte sein. Bevorzugt ist der Brechungsindex jedoch gleichgroß oder größer als der Brechungsindex des Materials der PMMA-haltigen Platte, da dadurch die Effizienz der Lichtauskopplung erhöht wird.

In einer alternativen, aber keinesfalls zwingenden Ausführungsform der vorliegenden Erfindung kann der aufgedruckte Thermoplast zusätzlich Streupartikel aufweisen. Mittels der Streupartikel wird die Lichtstreuung im aufgedruckten Thermoplasten beeinflusst, so dass der Fachmann eine möglichst gleichmäßigen Lichtauskopplung durch Abstimmung folgender Parameter leicht einstellen kann: Größe der Störstellen, Verteilung der Störstellen, Brechungsindex des Thermoplasten der Störstellen im Verhältnis zum Brechungsindex des Materials der farblos transparenten Platte, Zusammensetzung der Reflektorfolie und schließlich Art, Größe und Menge optionaler Streupartikel.

Bei den Streupartikeln kann es sich sowohl um organische als auch um anorganische Streupartikel handeln. Entscheidend ist, dass die Größe und der Brechungsindex der Partikel so gestaltet sind, dass sichtbares Licht gestreut wird. Bei organischen Partikeln kann es sich beispielsweise um PMMA-Suspensionspolymerisate handeln. Bei anorganischen Streupartikeln handelt es sich in der Regel um Partikel aus Titandioxid, Siliziumdioxid oder Bariumsulfat. Insgesamt sind solche Streupartikel dem Fachmann bekannt und einfach auszuwählen.

Die Form der aufgedruckten Thermoplasten der Störstellen ist zumeist rund, rechteckig, streifenförmig, hexagonal oder quadratisch. Das Druckbild entspricht in der Regel einer typischen Punkt- oder sonstigen Struktur, wie man sie typischerweise auf Lichtleitplatten für BLUs und Lichtpaneelen findet. Dabei liegt die Bedruckung bevorzugt mit einer von den Kanten, durch die Licht eingekoppelt wird, ausgehend zunehmenden Anzahl und/oder Größe der Störstellen. So sind die größten und/oder meisten Strukturen bei einer Lichtleitplatte, in die das Licht von links eingekoppelt wird, auf der rechten Kante zu finden. Entsprechend finden sich bei einer Lichtleitplatte, in die von allen vier Kanten Licht eingekoppelt wird, die größten und/oder meisten Strukturen in der Mitte der Lichtleitplatte.

Die Ausdehnungen der Strukturen der Störstellen in die beiden der Lichtleitplatte parallelen Dimensionen entsprechen den in solchen System dem Fachmann bekannten Ausdehnungen. Die Dicke der Strukturen zwischen der farblos transparenten Platte und der Reflektorfolie und damit die Ausdehnung der Strukturen in die dritte, zu der farblos transparenten Platte senkrechten Dimension liegt zwischen 0,5 und 200µm, bevorzugt zwischen 1 und 30 µm. Idealerweise entspricht dieser Dicke damit auch dem Abstand der Reflektorfolie zur farblos transparenten Platte in der Lichtleiterplatte.

Die Kanten der erfindungsgemäßen Lichtleitplatte werden mittels Lichtquelle(n) beleuchtet und liegen damit in der Funktion einer Lichteinleitungsfläche vor. Dabei kann das Licht über eine, zwei, drei oder sogar alle vier Kanten in die Lichtleitplatte eingekoppelt werden. Das Licht wird über mindestens eine der beiden senkrecht zu den Kanten stehenden Oberflächen, den Lichtaustrittsflächen, wieder abgegeben. Der Begriff Lichtaustrittsfläche kennzeichnet hierbei eine Fläche des Lichtleitkörpers, die geeignet ist, Licht abzustrahlen. Die Lichteinleitungsfläche wiederum ist in der Lage, Licht in die Lichtleitplatte aufzunehmen, so dass die lichtleitende Schicht das eingeleitete Licht über die gesamte Lichtaustrittsfläche verteilen kann.

Für den Fall, dass das Licht nur über eine Lichtaustrittsfläche ausgekoppelt wird, ist die Reflektorfolie bevorzugt weiß-opak. Für den Fall, dass das Licht teilweise auch auf der Rückseite der Reflektorfolie ausgekoppelt werden soll, muss diese transluzent weiß sein und einen entsprechend hohen Lichttransmissionsgrad aufweisen.

Für Ausführungsformen, bei denen das Licht nicht über alle vier Kanten bzw. nur über Teile von Kanten eingekoppelt wird, sind die Kanten, durch die kein Licht eingekoppelt wird, bevorzugt ganz oder teilweise mit einer reflektierenden Schicht ausgestattet. Bei dieser reflektierenden Schicht kann es sich um eine der Reflektorfolie entsprechende Folie oder aber auch um einen weiß-opak gefärbten Lack handeln.

Ein zweiter wichtiger Aspekt der vorliegenden Erfindung ist das Verfahren zur Herstellung von erfindungsgemäßen Lichtleitplatten, die vorzugsweise eine Dicke zwischen 0,25 mm und 25 mm, noch bevorzugter zwischen 1 mm und 8 mm, besonders bevorzugt zwischen 1,5 mm und 4 mm haben. Bei diesem neuartigen Verfahren wird in einem ersten Verfahrensschritt aus einem farblos transparenten Material mittels Extrusion mit einem Glättwerk eine Platte hergestellt. In einem zweiten, inline durchgeführten Verfahrensschritt wird auf diese Platte eine mit einem farblosen Thermoplasten bedruckte opak-weiße oder transluzent weiße, thermoplastische Reflektorfolie laminiert. Bevorzugt wird die Platte abschließend inline in Stücke gesägt, geschnitten oder auf eine Rolle gewickelt. Bei dem Aufrollen auf eine Rolle muss diese dabei derart dimensioniert sein, dass die fertige Lichtleitplatte beim Aufrollen keinen zu großen Spannungen unterliegt.

Erfindungsgemäß zeichnet sich das Verfahren weiterhin dadurch aus, dass die Bedruckung nach der Lamination dergestalt zwischen der Platte und der Reflektorfolie befindet, dass ein optischer Kontakt zwischen Platte und Reflektorfolie hergestellt wird und dass es keinen direkten optischen Kontakt zwischen farblos transparenter Platte und Reflektorfolie gibt, und dass der gedruckte Thermoplast eine Glasübergangstemperatur größer 25 °C und kleiner als die Glasübergangstemperaturen des farblos transparenten Materials der Platte und des Thermoplasten der Reflektorfolie aufweist. Um eine exakte Positionierung der Säge für die Zuschnitte zu ermöglichen, können zusätzlich zu den weißen, bzw. farblosen Auskoppelstrukturen auch noch andersfarbige Positionsmarken bevorzugt auf der Rückseite der Reflektorfolie gedruckt werden.

Das erfindungsgemäße Verfahren ist deutlich zeit- und kosteneffizienter durchzuführen als Verfahren des Standes der Technik und führt zusätzlich zu einem Schutz für die Bedruckung. Dies wird dadurch erreicht, dass die optischen Störstellen zunächst auf die Reflektorfolie gedruckt werden. Darauf wird die Reflektorfolie mit dem Druckmuster in der Weise ganzflächig auf die Platte laminiert, dass die optischen Störstellen sich zwischen farblos transparenter Platte und Reflektorfolie in Form eines Spacers befinden. Der Druck auf die Reflektorfolie wird bevorzugt mittels eines üblichen Foliendruckverfahrens durchgeführt. Insbesondere wird die Bedruckung mit einem preiswerten Massendruckverfahren wie zum Beispiel dem Rollentiefdruck aufgebracht. Das Bedrucken kann offline in einem getrennten Verfahren, z.B. als integraler Bestandteil der Folienextrusion erfolgen. Alternativ ist es jedoch auch möglich, dass die Bedruckung die Reflektorfolie online, vor der Lamination auf die farblos transparente Platte erfolgt.

Die farblos transparenten Platten werden alternativ zur beschriebenen und bevorzugten Extrusion mittels eines (kontinuierlichen) Gussverfahrens hergestellt und liegen zunächst in Form eines unendlichen Polymerbandes vor.

Das Verbinden mit der bedruckten Folie erfolgt im Gegensatz zu dem in DE 10 2009 027288 A1 beschriebenen Verfahren erst hinter dem Glättwerk. Bei der Lamination ist in der Regel kein Klebstoff oder Haftvermittler nötig, da bei der Lamination die Oberfläche der farblos transparenten Platte und/oder der bedruckten Reflektorfolie eine Temperatur aufweist, die oberhalb der Glasübergangstemperatur, bzw. Schmelztemperatur des gedruckten Thermoplasten der Störstellen aufweist, wobei diese Temperatur möglichst unterhalb der Glasübergangstemperaturen bzw. Schmelztemperaturen der farblos transparenten Platte und der Reflektorfolie liegt.

Bei der Lamination, d.h. direkt nach Auflage der bedruckten Reflektorfolie auf die farblos transparente Platte mit der Bedruckung zwischen diesen beiden Schichten werden diese Schichten derart durch Walzen geführt, dass eine Anhaftung des gedruckten Thermoplasten auf der farblos transparenten Platte erfolgt. Temperatur, Shorehärte der Gummiwalze und Walzendruck müssen dabei so gewählt sein, dass es zu keinem dauerhaften direkten optischen Kontakt zwischen den unbedruckten Stellen der Reflektorfolie und der farblos transparenten Platte kommt. Dabei ist bevorzugt die Reflektorfolienseite der führenden Walze, bei der es sich insbesondere um eine Gummiwalze handelt, zugewandt.

Erfindungsgemäß gibt es zwei gleichermaßen bevorzugte Ausführungsformen bezüglich der Lamination. In der ersten Ausführungsform erfolgt die Lamination zu einem Zeitpunkt, zu dem der Schmelzestrang bereits soweit zur farblos transparenten Platte abgekühlt ist, dass die Oberflächentemperatur unterhalb der Glasübergangstemperatur des gedruckten Thermoplasten liegt. In dieser Variante wird direkt vor der Lamination die Oberfläche der PMMA-haltigen Platte mittels eines Heizstrahlers, einer IR-Quelle oder eines Gebläses auf eine Temperatur oberhalb der Glastemperatur des gedruckten Thermoplasten erhitzt, bevor die bedruckte Reflektorfolie wie beschrieben mittels einer Walze, insbesondere mittels einer Gummiwalze, auf die Oberfläche der Platte gedrückt wird.

In der zweiten erfindungsgemäßen Ausführungsform wird die bedruckte Reflektorfolie direkt nach dem Glättwerk mittels mindestens einer Walze, bevorzugt mittels einer Gummiwalze, auf die farblos transparente Platte laminiert. Der Ort des Laminationsschrittes ist dabei derart nah an dem Glättwerk zu installieren, dass die Oberfläche der farblos transparenten Platte einerseits ausreichend abgekühlt ist und gleichzeitig noch eine Temperatur oberhalb der Glasübergangstemperatur bzw. Schmelztemperatur des aufgedruckten Thermoplasten aufweist.

Das abgekühlte Laminat aus farblos transparenter Platte, Bedruckung und Reflektorfolie kann nach dem Abkühlen zugeschnitten oder auf eine Rolle aufgewickelt werden und weiter veredelt werden. Als Veredelung können beispielsweise die Kanten poliert oder wie bereits beschrieben mit einem reflektierenden Lack oder einer reflektierenden Folie bzw. einem Klebeband versehen werden.

Dieses neuartige Inlinelaminationsverfahren und eine damit hergestellte Lichtleitplatte kombinieren die Vorteile eines geringen Arbeitsaufwandes bei der Herstellung der Strukturen durch einen Inlineprozess, jedoch ohne die Nachteile hoher Investitions- und Instandhaltungskosten. Zudem ist bei diesem Verfahren ein Wechsel der Struktur wesentlich einfacher, in weniger Prozessschritten durchführbar als bei einer Strukturierung über Walzen, da Strukturwechsel während des laufenden Herstellungsprozesses des Lamiants, beispielsweise einfach durch Wechsel der Reflektorfolie durchgeführt werden können. Insbesondere ist der Druck auf eine flexible Folie von Rolle zu Rolle sehr schnell und kostengünstig mit gängigen Foliendrucktechniken realisierbar.

Vor oder bei dem Einbau in ein Endgerät werden die Kanten analog dem Stand der Technik mit einer oder mehreren Beleuchtungseinheiten ausgestattet. Die Lichtquellen können zur besseren Bestrahlung des Lichtleitkörpers mit Reflektoren ausgestattet sein. Bevorzugt handelt es sich bei diesen Lichtquellen um LED.

Die erfindungsgemäßen Lichtleitplatten haben überraschend den zusätzlichen technischen Vorteil, dass diese das Licht mit einer gleichmäßigen Intensitätsverteilung zwischen 0 und 60° auskoppeln. Damit ist bei Verwendung einer erfindungsgemäßen Lichtleitplatte eine Streufolie oder-platte nur noch nötig, um die Lichtleitplatte vor Staub oder Verkratzen zu schützen, und um den Lichteindruck zusätzlich gleichmäßiger erscheinen zu lassen. Diese Streufolien oderplatten müssen dazu im Vergleich zum Stand der Technik jedoch nur noch sehr geringe Mengen an Streupartikeln enthalten. Alternativ ist es sogar möglich, den Eindruck dadurch zu erzielen, dass die Streufolie oder-platte auf der Seite des Betrachters oberflächenbehandelt ist, diese Oberflächenbehandlung kann bei der Extrusion beispielsweise mittels einer strukturierten oder gummierten Walze erzielt werden. In dieser letzten Ausführungsform können die Streufolien bzw. -platten dann komplett ohne Streupartikel eingesetzt werden. Damit haben die Lichtleitplatten gemäß vorliegender Erfindung den zusätzlichen großen Vorteil, dass die Verwendung dieser die Lichtausbeute, z.B. in Beleuchtungssystem auf LED-Basis, zusätzlich steigern.

Die erfindungsgemäßen Lichtleitplatten, bzw. die damit hergestellten Vorrichtungen zum Transport von Licht finden bevorzugt als Hinterleuchtung in LCD-Bildschirmen Verwendung. Weiterhin können sie als Lichtpaneele oder als Hinterleuchtung von Hinweis- oder Reklameschildern eingesetzt werden. Bei Hinterleuchtung eines LCD-Bildschirms werden bevorzugt auf der Leuchtseite noch Streu- und Lichtlenkfolien auf die Lichtleitplatte aufgelegt. Bei Lichtpaneelen wird üblicherweise eine diffus streuende Platte bzw. Folie oder eine mikrostrukturierte Folie vor die Leuchtseite montiert, um die Abstrahlcharakteristik des Leuchtpanels gezielt zu beeinflussen. Bei Hinweis- oder Reklameschildern wird üblicherweise eine farbig transparente oder transluzente Folie auf die Leuchtseite der Lichtlenkplatte montiert. Diese wird dann durch das Lichtpanel hinterleuchtet.

### Bezugszeichen zu den Zeichnungen

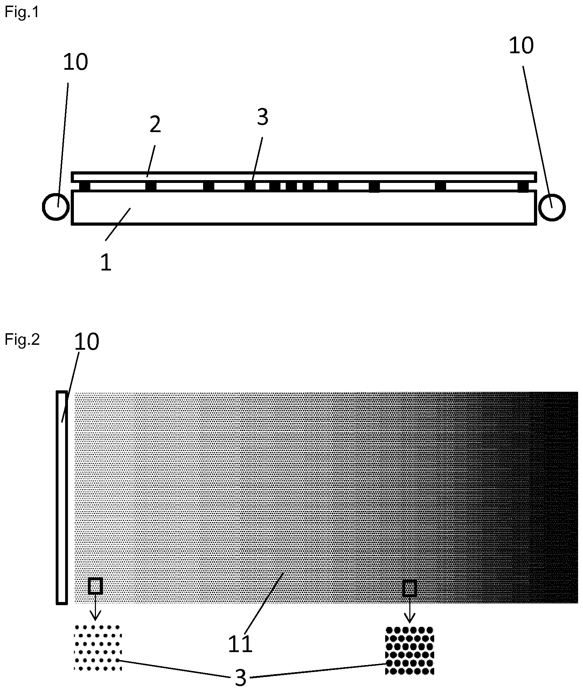

Fig.1 stellt beispielhaft eine erfindungsgemäße Lichtleitplatte und zwei Lichtquellen zur Lichteinspeisung dar.
Fig.2 illustriert die von der Lichtquelle ausgehend zunehmende Dichte der aufgedruckten Thermoplasten oder Reaktivklebstoffe. In diesem Fall erfolgt die Dichtezunahme durch eine Vergrößerung der Strukturen bei gleicher relativer Anzahl.

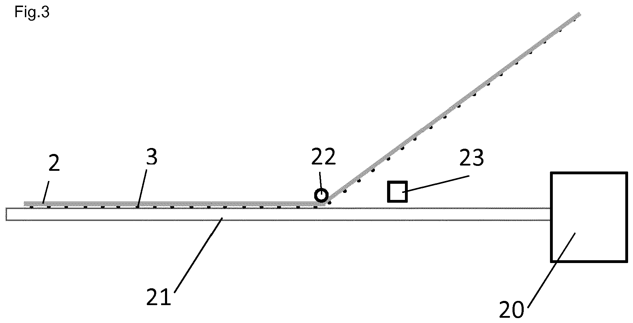

Fig.3 Stellt schematisch eine mögliche Herstellung der erfindungsgemäßen Lichtleitplatten dar. In diesem Fall werden die auf die Reflektorfolie aufgedruckten Strukturen erfindungsgemäß erhitzt und mittels einer Walze auf die transparente Platte gedrückt.

Folgende Bezugszeichen wurden in den Zeichnungen verwendet:
- 1: Farblos transparente Platte
- 2: Reflektorfolie
- 3: Aufgedruckter Thermoplast oder Reaktivklebstoff
- 10: Lichtquelle
- 11: Druckmuster
- 20: Extruder mit Glättwerk
- 21: Farblos, transparente Plattenbahn vom Glättwerk
- 22: Andruckwalze
- 23: Heizeinrichtung , z.B. Heizstrahler, IR-Quelle oder Gebläse

## Patentansprüche

1. Verfahren zur Herstellung von Lichtleitplatten, aus einer farblosen transparenten Platte (1), einer bedruckten opak-weißen oder transluzent weißen thermoplastischen Reflektorfolie (2) und einer dazwischen angeordneten Bedruckung (3), die derart angeordnet ist, dass kein direkter optischer Kontakt zwischen der Platte (1) und Reflektorfolie (2) besteht,
**dadurch gekennzeichnet,**
**dass** aus einem farblos transparenten Material mittels Extrusion mit einem Glättwerk (20) eine Plattenbahn (21) hergestellt wird,
**dass** auf diese Plattenbahn (21) eine mit einem farblosen Thermoplasten (3) bedruckte opak-weiße oder transluzent weiße thermoplastische Reflektorfolie (2) inline laminiert wird,
**dass** die Plattenbahn (21) abschließend inline in Stücke gesägt, geschnitten oder auf eine Rolle gewickelt wird
und
**dass** der gedruckte Thermoplast (3) eine Glasübergangstemperatur größer als 25 °C und kleiner als die Glasübergangstemperaturen des farblos transparenten Materials der Plattenbahn (21) und des Thermoplasten der Reflektorfolie (2) aufweist.

2. Verfahren gemäß Anspruch 1, **dadurch gekennzeichnet, dass** direkt vor der Lamination die Oberfläche der PMMA-haltigen Plattenbahn (21) mittels eines Heizstrahlers (23), einer IR-Quelle (23) oder eines Gebläses (23) auf eine Temperatur oberhalb der Glastemperatur des gedruckten Thermoplasten (3) erhitzt wird und die bedruckte Reflektorfolie (2) mittels mindestens einer Walze (22), bevorzugt einer gummierten Walze, auf die Oberfläche der Plattenbahn (21) gedrückt wird.

3. Verfahren gemäß Anspruch 1, **dadurch gekennzeichnet, dass** die bedruckte Reflektorfolie (2) direkt nach dem Glättwerk (20) mittels mindestens einer Walze (22), bevorzugt einer gummierten Walze, auf die farblos transparente Plattenbahn (21) laminiert wird.

4. Verfahren gemäß mindestens einem der Ansprüche 1 bis 3, **dadurch gekennzeichnet, dass** die farblose transparente Plattenbahn (21) aus Polycarbonat, einem Cycloolefincopolymer, PMMA oder einem Copolymer aus MMA und Styrol oder aus einem Blend, mindestens 50 Gew% PMMA enthaltend, besteht.

5. Verfahren gemäß mindestens einem der Ansprüche 1 bis 4, **dadurch gekennzeichnet, dass** die farblose transparente Plattenbahn (21) eine Dicke zwischen 1,5 und 4 mm aufweist.

6. Verfahren gemäß mindestens einem der Ansprüche 1 bis 5, **dadurch gekennzeichnet, dass** es sich bei der Reflektorfolie (2) um eine Folie aus opak-weißem PET oder um dreischichtige Folien mit einer Partikel enthaltenen, teilkristallinen mittleren Schicht aus Polypropylen und zwei äußeren Schichten aus Cycloolefincopolymeren handelt.

7. Verfahren gemäß mindestens einem der Ansprüche 1 bis 6, **dadurch gekennzeichnet, dass** der aufgedruckte Thermoplast (3) einen Brechungsindex aufweist, der gleich dem oder größer als der Brechungsindex des Materials der farblos transparenten Plattenbahn (21) ist.

8. Verfahren gemäß mindestens einem der Ansprüche 1 bis 7, **dadurch gekennzeichnet, dass** der aufgedruckte Thermoplast (3) zusätzlich Streupartikel aufweist.

9. Verfahren gemäß mindestens einem der Ansprüche 1 bis 8, **dadurch gekennzeichnet, dass** die Reflektorfolie (2) eine Dicke zwischen 25 und 500 µm aufweist.

10. Verfahren gemäß mindestens einem der Ansprüche 1 bis 9, **dadurch gekennzeichnet, dass** der aufgedruckte Thermoplast (3) rund, rechteckig, streifenförmig, hexagonal oder quadratisch mit einer von den Kanten, durch die Licht eingekoppelt wird, ausgehend zunehmenden Anzahl und/oder Größe der Strukturen aufgedruckt ist.

11. Verfahren gemäß mindestens einem der Ansprüche 1 bis 10, **dadurch gekennzeichnet, dass** der aufgedruckte Thermoplast zwischen der farblos transparenten Plattenbahn (1) und der Reflektorfolie (2) eine Dicke zwischen 0,5 und 200 µm, bevorzugt zwischen 1 und 30 µm aufweist.

12. Verfahren gemäß mindestens einem der Ansprüche 1 bis 11, **dadurch gekennzeichnet, dass** die Kanten, durch die kein Licht eingekoppelt wird ganz oder teilweise mit einer reflektierenden Schicht ausgestattet werden.

13. Lichtleitplatte,
bestehend aus einer farblos transparenten Platte (1) und einer opak-weißen oder transluzent weißen, thermoplastischen Reflektorfolie (2), die mittels einer dazwischen angeordneten Bedruckung (3) derart optisch verbunden sind, dass es keinen direkten optischen Kontakt zwischen der farblos transparenten Platte (1) und der Reflektorfolie (2) gibt, da
durch gekennzeichnet,
dass die Bedruckung (3) aus einem strukturiert aufgedruckten farblosen Thermoplast besteht, der eine Glasübergangstemperatur größer als 25 °C und kleiner als die Glasübergangstemperaturen des Materials der farblos transparenten Platte (1) und des Thermoplasten der Reflektorfolie (2) aufweist,
oder
dass die Bedruckung (3) aus einem strukturiert aufgedruckten farblosen Reaktivklebstoff mit einer Aktivierungstemperatur zwischen 25 °C und der Glasübergangstemperatur des Materials der farblos transparenten Platte (1) und des Thermoplasten der Reflektorfolie (2), besteht.

14. Lichtleitplatte nach Anspruch 13,
**dadurch gekennzeichnet,**
**dass** es sich bei der Reflektorfolie (2) um eine extrudierte Folie handelt.

## Claims

1. Process for the production of light guide plates made of a colorless transparent sheet (1), a printed opaque white or translucent white thermoplastic reflector film (2) and, arranged therebetween, a print (3) arranged in such a way that there is no direct optical contact between the sheet (1) and reflector film (2),
**characterized in that**
a continuous sheet (21) is produced from a colorless transparent material by means of extrusion with a polishing stack (20),
an opaque white or translucent white thermoplastic reflector film (2) printed with a colorless thermoplastic (3) is laminated in-line onto said continuous sheet (21),
the continuous sheet (21) is finally sawn inline into pieces, or is cut or is wound onto a roll,
and
the glass transition temperature of the printed thermoplastic (3) is above 25°C and below the glass transition temperatures of the colorless transparent material of the continuous sheet (21) and of the thermoplastic of the reflector film (2).

2. Process according to Claim 1, **characterized in that** directly prior to the lamination process the surface of the continuous sheet (21) comprising PMMA is heated by means of a radiant heater (23), an IR source (23) or a blower (23) to a temperature above the glass transition temperature of the printed thermoplastic (3), and at least one roll (22), preferably one rubberized roll, is used to press the printed reflector film (2) onto the surface of the continuous sheet (21).

3. Process according to Claim 1, **characterized in that** at least one roll (22), preferably one rubberized roll, is used to laminate the printed reflector film (2) onto the colorless transparent continuous sheet (21) directly after the polishing stack (20).

4. Process according to at least one of Claims 1 to 3, **characterized in that** the colorless transparent continuous sheet (21) is composed of polycarbonate, a cycloolefin copolymer, PMMA or a copolymer of MMA and styrene, or of a blend comprising at least 50% by weight of PMMA.

5. Process according to at least one of Claims 1 to 4, **characterized in that** the thickness of the colorless transparent continuous sheet (21) is from 1.5 to 4 mm.

6. Process according to at least one of Claims 1 to 5, **characterized in that** the reflector film (2) is a film made of opaque white PET or is a three-layer film with a semicrystalline middle layer made of polypropylene comprising particles and with two exterior layers made of cycloolefin copolymers.

7. Process according to at least one of Claims 1 to 6, **characterized in that** the refractive index of the thermoplastic (3) applied by printing is the same as or greater than the refractive index of the material of the colorless transparent continuous sheet (21).

8. Process according to at least one of Claims 1 to 7, **characterized in that** the thermoplastic (3) applied by printing additionally comprises scattering particles.

9. Process according to at least one of Claims 1 to 8, **characterized in that** the thickness of the reflector film (2) is from 25 to 500 µm.

10. Process according to at least one of Claims 1 to 9, **characterized in that** the thermoplastic (3) applied by printing has been applied by printing round, rectangular, strip-shaped, hexagonal or square structures, where the number and/or size of the structures increases with the distance from the edges through which the light is input.

11. Process according to at least one of Claims 1 to 10, **characterized in that** the thickness of the thermoplastic applied by printing is from 0.5 to 200 µm, preferably from 1 to 30 µm, between the colorless transparent continuous sheet (1) and the reflector film (2).

12. Process according to at least one of Claims 1 to 11, **characterized in that** the edges through which no light is input are equipped entirely or to some extent with a reflective layer.

13. Light guide plate
composed of a colorless transparent sheet (1) and of an opaque white or translucent white, thermoplastic reflector film (2) optically connected by means of a print (3) arranged therebetween in such a way that there is no direct optical contact between the colorless transparent sheet (1) and the reflector film (2),
**characterized**
**in that** the print (3) is composed of a colorless thermoplastic applied in structured form by printing, its glass transition temperature being above 25°C and below the glass transition temperatures of the material of the colorless transparent sheet (1) and of the thermoplastic of the reflector film (2),
or
**in that** the print (3) is composed of a colorless reactive adhesive applied in structured form by printing with an activation temperature between 25°C and the glass transition temperature of the material of the colorless transparent sheet (1) and of the thermoplastic of the reflector film (2).

14. Light guide plate according to Claim 13,
**characterized in that**
the reflector film (2) is an extruded film.

## Revendications

1. Procédé de fabrication de plaques conductrices de lumière, constituées d'une plaque transparente incolore (1), d'un film réflecteur thermoplastique blanc opaque ou blanc translucide imprimé (2) et d'une impression (3) agencée entre eux, qui est agencée de sorte qu'il n'existe pas de contact optique direct entre la plaque (1) et le film réflecteur (2), **caractérisé en ce que**
une bande de plaque (21) est fabriquée à partir d'un matériau transparent incolore par extrusion avec un outil lisse (20),
un film réflecteur thermoplastique blanc opaque ou blanc translucide (2) imprimé avec un thermoplastique incolore (3) est stratifié en ligne sur cette bande de plaque (21),
puis la bande de plaque (21) est sciée en ligne en morceaux, découpée ou enroulée sur un rouleau,
et
le thermoplastique imprimé (3) présente une température de transition vitreuse supérieure à 25 °C et inférieure aux températures de transition vitreuse du matériau transparent incolore de la bande de plaque (21) et du thermoplastique du film réflecteur (2).

2. Procédé selon la revendication 1, **caractérisé en ce que**, directement avant la stratification, la surface de la bande de plaque contenant du PMMA (21) est portée à une température supérieure à la température de transition vitreuse du thermoplastique imprimé (3) au moyen d'un radiateur rayonnant (23), d'une source d'IR (23) ou d'un ventilateur (23) et le film réflecteur imprimé (2) est pressé au moyen d'un cylindre (22), de préférence d'un cylindre caoutchouté, sur la surface de la bande de plaque (21).

3. Procédé selon la revendication 1, **caractérisé en ce que** le film réflecteur imprimé (2) est stratifié directement après l'outil lisse (20) au moyen d'au moins un cylindre (22), de préférence un cylindre caoutchouté, sur la bande de plaque transparente incolore (21).

4. Procédé selon au moins l'une quelconque des revendications 1 à 3, **caractérisé en ce que** la bande de plaque transparente incolore (21) est constituée de polycarbonate, d'un copolymère de cyclooléfine, de PMMA ou d'un copolymère de MMA et de styrène ou d'un mélange contenant au moins 50 % en poids de PMMA.

5. Procédé selon au moins l'une quelconque des revendications 1 à 4, **caractérisé en ce que** la bande de plaque transparente incolore (21) présente une épaisseur comprise entre 1,5 et 4 mm.

6. Procédé selon au moins l'une quelconque des revendications 1 à 5, **caractérisé en ce que** le film réflecteur (2) est un film en PET blanc opaque ou des films tricouches comprenant une couche centrale partiellement cristalline en polypropylène contenant des particules et deux couches extérieures en copolymères de cyclooléfine.

7. Procédé selon au moins l'une quelconque des revendications 1 à 6, **caractérisé en ce que** le thermoplastique imprimé (3) présente un indice de réfraction qui est supérieur ou égal à l'indice de réfraction du matériau de la bande de plaque transparente incolore (21).

8. Procédé selon au moins l'une quelconque des revendications 1 à 7, **caractérisé en ce que** le thermoplastique imprimé (3) comprend en outre des particules de diffusion.

9. Procédé selon au moins l'une quelconque des revendications 1 à 8, **caractérisé en ce que** le film réflecteur (2) présente une épaisseur comprise entre 25 et 500 µm.

10. Procédé selon au moins l'une quelconque des revendications 1 à 9, **caractérisé en ce que** le thermoplastique imprimé (3) est imprimé sous forme ronde, rectangulaire, de bandes, hexagonale ou carrée avec un nombre et/ou une taille de structures croissants en partant des bords, par lesquels la lumière est introduite.

11. Procédé selon au moins l'une quelconque des revendications 1 à 10, **caractérisé en ce que** le thermoplastique imprimé entre la bande de plaque transparente incolore (1) et le film réflecteur (2) présente une épaisseur comprise entre 0,5 et 200 µm, de préférence entre 1 et 30 µm.

12. Procédé selon au moins l'une quelconque des revendications 1 à 11, **caractérisé en ce que** les bords par lesquels aucune lumière n'est introduite sont munis en totalité ou en partie d'une couche réflectrice.

13. Plaque conductrice de lumière,
constituée d'une plaque transparente incolore (1) et d'un film réflecteur thermoplastique blanc opaque ou blanc translucide (2), qui sont reliés optiquement au moyen d'une impression (3) agencée entre eux, de sorte qu'il n'existe pas de contact optique direct entre la plaque transparente incolore (1) et le film réflecteur (2),
**caractérisée en ce que**
l'impression (3) est constituée d'un thermoplastique incolore imprimé avec une structure, qui présente une température de transition vitreuse supérieure à 25 °C et inférieure aux températures de transition vitreuse du matériau de la plaque transparente incolore (1) et du thermoplastique du film réflecteur (2),
ou
l'impression (3) est constituée d'un adhésif réactif incolore imprimé avec une structure, ayant une température d'activation comprise entre 25 °C et la température de transition vitreuse du matériau de la plaque transparente incolore (1) et du thermoplastique du film réflecteur (2).

14. Plaque conductrice de lumière selon la revendication 13, **caractérisée en ce que** le film réflecteur (2) est un film extrudé.
